Europäisches Patentamt

European Patent Office

Office européen des brevets

(11) Veröffentlichungsnummer: **0 155 525**
**A2**

## (12) EUROPÄISCHE PATENTANMELDUNG

(21) Anmeldenummer: 85101871.3

(22) Anmeldetag: **21.02.85**

(51) Int. Cl.⁴: **F 16 B 12/04**

(30) Priorität: 10.03.84 DE 3408786
22.08.84 DE 3430818
09.01.85 DE 3500457
11.02.85 DE 3504526

(43) Veröffentlichungstag der Anmeldung:
25.09.85 Patentblatt 85/39

(84) Benannte Vertragsstaaten:
AT BE CH FR GB IT LI LU NL SE

(71) Anmelder: Fischer, Walter
Rationalstrasse 4
D-4520 Melle 7(DE)

(72) Erfinder: Fischer, Walter
Rationalstrasse 4
D-4520 Melle 7(DE)

(74) Vertreter: Schirmer, Siegfried
Osningstrasse 10
D-4800 Bielefeld 1(DE)

(54) **Verbindung von flächigen Teilen, insbesondere bei Möbeln.**

(57) In das zur Verbindung dienende Element (2) ist von den beiden Stirnseiten aus je eine Längsbohrung (22) eingebracht, an deren Enden eine oder mehrere durchgehende Querbohrungen (23) angeordnet sind, wobei die an der Stirnseite vorhandene Spitze (17) durch eine Längsbohrung (22) angeschnitten ist. Hierdurch wird eine verbesserte Verteilung des in die zylindrischen Bohrungen der zu verbindenden Teile eingebrachten Klebstoffs, der in eine flexible Hülle hermetisch eingeschlossen ist, erreicht.

Zur Erzielung einer dichten Verriegelungsverbindung dient ein Drehelement, dessen zylindrische Bohrung rechtwinklig und so versetzt zur zylindrischen Bohrung für das Verbindungselement (2) angeordnet ist, daß dabei die zylindrische Bohrung für das Verbindungselement (2) angeschnitten ist. Beim Drehen des Drehelements greift dieses mit den Profilierungen der Mantelfläche in die Mantelfläche des Verbindungselements (2) ein und zieht dieses problemlos in Richtung der Anschlußfuge.

FIG. 21

Patentanwalt
## Dipl.-Ing. Siegfried Schirmer
Zugelassener Vertreter
vor dem Europäischen Patentamt

Os.ingstraße 10
4800 Bielefeld 1
Telefon (05 21) 29 57 82

0155525

22.01.1985
482/6-84

Anmelder:
Walter Fischer
Rationalstraße 4
4520 Melle 7

Verbindung von flächigen Teilen,
insbesondere bei Möbeln

Die Erfindung betrifft eine Verbindung von flächigen Teilen, insbesondere bei Möbeln aus Holz oder holzähnlichem Material, unter Verwendung von Klebstoff und einem Verbindungselement, bei der der Klebstoff in eine flexible Hülle hermetisch eingeschlossen und die Hülle mit dem eingeschlossenen Klebstoff als selbständiger Teil, der annähernd zylindrische Form mit einer stirnseitigen Abdeckung aufweist, in die zylindrischen Bohrlöcher der zu verbindenden Teile sich dort verklemmend einbringbar ausgebildet ist und bei der das Verbindungselement zur unsichtbaren Verbindung in die Bohrlöcher einschlagbar oder einpreßbar ist und auf der Außenfläche eingepreßte oder eingeschnittene Profilierungen aufweist, und gebildet aus einem um ein vorgegebenes Maß zusammengepreßten zylindrischen Rohling aus Holz oder einem anderen statisch stabilen zusammenpreßbaren aufquellfähigen Material, bei dem die Außenfläche zur Verbesserung der Aufquellfähigkeit an mehreren Stellen durch Einschneiden, vorzugsweise in Form von Ringfräsungen,

0155525

zerstört ist und bei dem beide Stirnseiten zur leichteren Zerstörung der flexiblen Hülle jeweils spitz verlaufend ausgebildet sind oder je eine Spitze aufweisen.

Bei einem bereits bekannten Verbindungselement wird die Aufquellfähigkeit durch Zusammenpressen des zylindrischen Rohlings aus Holz oder einem anderen statisch stabilen aufquellfähigen Material sowie durch die Zerstörung der Außenfläche, vorzugsweise durch das Einschneiden von Ringfräsungen, verbessert. So wird bei einem Holzdübel durch das Einschneiden das Hirnholz freigelegt, das bekannterweise gegenüber eindringender Feuchtigkeit wenig widerstandsfähig ist.

Bei dem bekannten Verbindungselement ist nach dem Aushärten des Klebstoffes zwischen dem Verbindungselement und der Holzspanplatte bzw. der Holzplatte eine Nut-/Federverbindung vorhanden. Die Feder ist hierbei durch die Holzspanplatte oder das Holz gebildet, wobei diese Feder der Ringnut des Verbindungselements angepaßt ist. Die Feder der Holzspanplatte entsteht durch Aufquellen der Holzspanplatte infolge der Aufnahme der Feuchtigkeit des Klebstoffs. Besonders vorteilhaft sind die bekannten Verbindungselemente in Verbindung mit einer Leimperle, bei der ein Klebstoff hermetisch in einer zerstörbaren Umhüllung eingeschlossen ist, verwendbar.

Die Herstellung unsichtbarer Verbindungen unter Verwendung von hermetisch in eine flexible Hülle eingeschlossenen Klebstoffs hat sich insbesondere im Möbelbau bewährt. Geschätzt wird dabei von Fachleuten das
problemlose Einbringen der mit Klebstoff gefüllten
flexiblen Hüllen in die zylindrischen Bohrlöcher und
die damit verbundenen Vorteile, insbesondere das saubere Einbringen des Klebstoffs in zeitlicher Unabhängigkeit von der Herstellung der eigentlichen Verbindung
der Teile.

Zum fugendichten Anschluß der Einzelteile eines Möbelkorpus ist eine Verriegelungsvorrichtung erforderlich,
die im allgemeinen durch eine Presse oder Zwingen gebildet wird. Solche Pressen oder Zwingen sind bis zum
Eintreten der Verbundwirkung zwischen Verbindungselement und den flächigen Teilen erforderlich.

Der vorliegenden Erfindung liegt die Aufgabe zugrunde,
eine dichte Verbindungsverriegelung von Teilen, insbesondere flächigen Teilen bei Möbeln auch ohne Verwendung von Pressen oder Zwingen zu erreichen und ein
Verbindungselement der aufgezeigten Gattung so auszubilden, daß die Aufquellfähigkeit bei gleichzeitiger Erhöhung der Verbundwirkung zwischen der Wandung
des zylindrischen Bohrlochs und dem Verbindungselement wesentlich erhöht und das Freisetzen des Klebstoffs aus den in den zylindrischen Bohrungen der
zu verbindenden Teile eingebrachten Hüllen der aufgezeigten Gattung erleichtert wird.

Erfindungsgemäß wird diese Aufgabe dadurch gelöst,
daß in das Verbindungselement beidseitig von den

- 4 -

Stirnseiten aus je eine Längsbohrung eingebracht ist, an deren Enden eine oder mehrere durchgehende Querbohrungen angeordnet sind und die stirnseitige Abdeckung der selbständigen Teile eine oder mehrere Sollbruchstelle(n) aufweist, wobei das Drehelement zur Herstellung einer dichten Verriegelungsverbindung durch einen zylindrischen Querschnitt mit auf der Außenseite des Mantels angeordneten vorstehenden Profilierungen und auf dem Mantel senkrecht stehender Kopffläche, die eine Ausnehmung zum Eingriff eines Hilfswerkzeugs aufweist, gekennzeichnet ist.

Ausgestaltungen der Erfindung sind in den Unteransprüchen aufgezeigt.

Durch die Anordnung der Längs- und Querbohrungen wird die Feuchtigkeit des Klebstoffs von einer wesentlich größeren Innenfläche des Verbindungselements aufgenommen, wodurch eine schnellere und umfassendere Aufquellung eintritt, die nach dem Aushärten des Klebstoffs erhalten bleibt. Die Längs- und Querbohrung trägt aber nicht nur im wesentlichen Umfang zur Verbesserung der Aufquellung des Verbindungselements bei, sondern vor allem zur verbesserten Verteilung des Klebstoffs über die gesamte Länge. Der Klebstoff dringt in die an den Stirnseiten offene Längsbohrung ein und tritt durch die Querbohrungen an mindestens zwei Stellen einer Ringfräsung wieder aus dem Verbindungselement aus. Hierdurch wird ein wesentlicher Teil des aus der zerstörten Leimperle im Bohrloch vorhandenen

- 5 -

Klebstoffs, der sich ja zunächst ausschließlich vor der Stirnseite befindet, auf die Länge des Verbindungselements verteilt. Die schnellere und gleichmäßigere Verteilung des Klebstoffs trägt im erheblichen Maße zur Verbesserung der Verbundwirkung bei. Die erfindungsgemäße Ausbildung einer Verbindung unter Verwendung eines Drehelementes zur Herstellung einer Verriegelung ermöglicht es, auch ohne die Verwendung von Pressen oder Zwingen eine völlig dichte Verriegelung bei der unsichtbaren Verbindung von Teilen unter Verwendung eines zylindrischen Verbindungselementes zu erreichen. Besonders vorteilhaft eignet sich die Erfindung für die dichte Verriegelung von flächigen Teilen bei Möbeln. Das vorgeschlagene Drehelement kann zum Verriegeln jedes beliebigen zylindrischen Verbindungselementes dienen, wobei je nach Bestimmung eine lösbare oder unlösbare Verbindung mit beliebiger Art der Klebstoffeinbringung möglich ist. Besonders geeignet ist die Erfindung für das Zusammenfügen von flächigen Teilen bei Möbeln durch den Heimwerker, wobei in die zylindrischen Bohrungen für das Verbindungselement bereits werkseitig die sich im Bohrloch verklemmenden Leimperlen eingebracht sind. Ebenso sind die für das Drehelement erforderlichen zylindrischen Bohrungen bereits werkseitig in die flächigen Teile eingebracht. Dabei ist zur Herstellung einer völlig dichten Verriegelungsverbindung nicht erforderlich, daß jedes Verbindungselement durch das erfindungsgemäße Drehelement angezogen wird. Für Sonderfälle ist eine lösbare Verbindung möglich, bei der das Verbindungselement beidseitig durch das Drehelement angezogen und dadurch arretiert wird. Das Drehelement kann aus beliebigen Materialien hergestellt sein. Besonders vorteilhaft ist ein Material, welches härter ist als das üblicherweise für das Verbindungselement zur Anwendung gelangende Buchenholz. Durch die Anordnung einer oder mehrerer Sollbruchstelle(n) in der stirnseitigen Abdeckung der flexiblen Hülle wird die Zerstörung der Hülle im zylindrischen Bohrloch und damit das Freisetzen des Klebstoffs beim Einbringen des Verbindungselements erleichtert und beschleunigt.

Ausführungsbeispiele der Erfindung sind in der Zeichnung dargestellt und werden im folgenden näher beschrieben. Es zeigen:

Fig. 1    eine Ansicht eines Drehelementes;

Fig. 2    eine Draufsicht auf eine Kopffläche;

Fig. 3    eine Variante zur Fig. 2;

Fig. 4    eine Variante zur Fig. 2;

Fig. 5    einen Schnitt durch ein Drehelement;

Fig. 6    eine Variante zur Fig. 5;

Fig. 7    eine Variante zur Fig. 5;

Fig. 8      einen Schnitt durch das Anschlußteil der
            Kopffläche;

Fig. 9      Seitenansichten verschiedener Fußausbildungen;

Fig. 10     eine Ansicht einer Variante der Kopfausbildung;

Fig. 11     eine Ansicht von zwei flächigen Möbelteilen
            vor dem Zusammenfügen;

Fig. 12     eine Ansicht von zwei miteinander verbundenen
            und verriegelten flächigen Möbelteilen;

Fig. 13     eine Draufsicht auf zwei miteinander verbundene flächige Möbelteile;

Fig. 14a    zwei verschiedene Mantelabwicklungen von
  + 14b     Verbindungselementen;

Fig. 15     einen Schnitt durch die Berührungsfläche
            zwischen einem Verbindungselement und einem
            Drehelement;

Fig. 16     eine isometrische Darstellung einer mit
            Klebstoff gefüllten und mit einer stirnseitigen Abdeckung versehenen flexiblen Hülle;

Fig. 17     einen Schnitt durch eine Hülle nach Fig. 16;

Fig. 18     eine isometrische Darstellung einer stirnseitigen Abdeckung mit einer Variante einer
            Sollbruchstelle;

Fig. 19    eine Variante zur Fig. 18;

Fig. 20    eine weitere Variante zur Fig. 18;

Fig. 21    eine Längsansicht eines Verbindungselements;

Fig. 22    eine Längsansicht eines Teiles eines Verbindungselements, um 90° gegenüber der Ansicht nach Fig. 21 gedreht;

Fig. 23    eine Stirnansicht eines Verbindungselements;

Fig. 24    einen Längsschnitt durch ein teilweise in ein zylindrisches Bohrloch eingeführtes Verbindungselement mit schematischer Darstellung des Leimflusses in den Bohrungen;

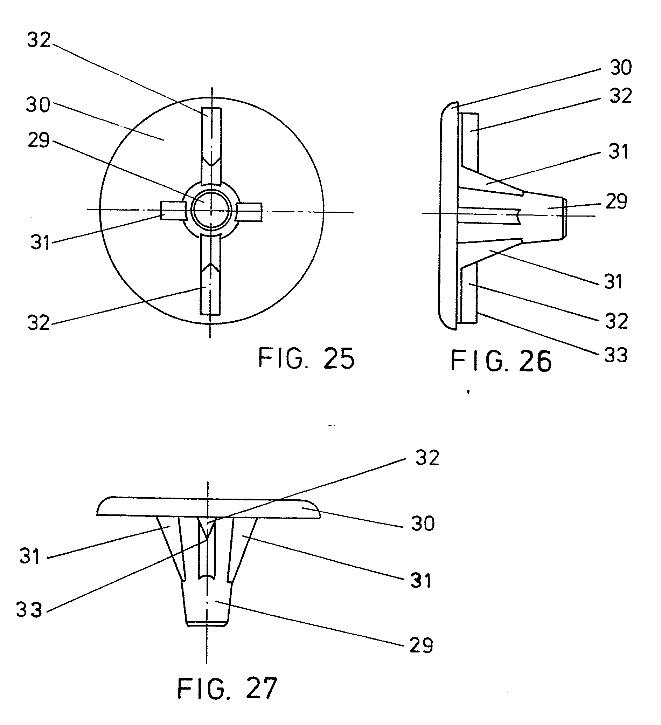

Fig. 25    eine Unteransicht einer Abdeckkappe für ein Drehelement;

Fig. 26    eine Seitenansicht einer Abdeckkappe und

Fig. 27    eine andere Seitenansicht einer Abdeckkappe.

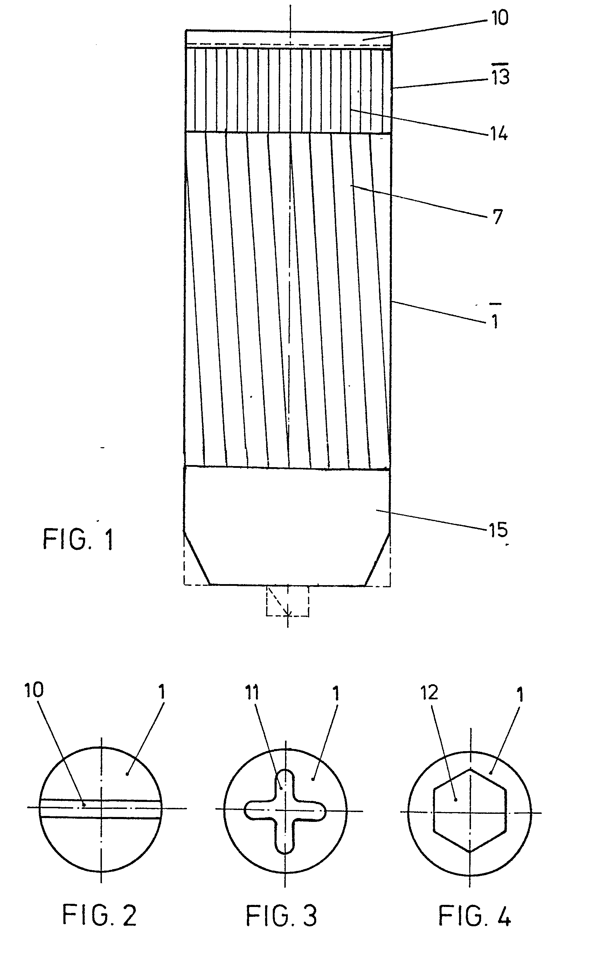

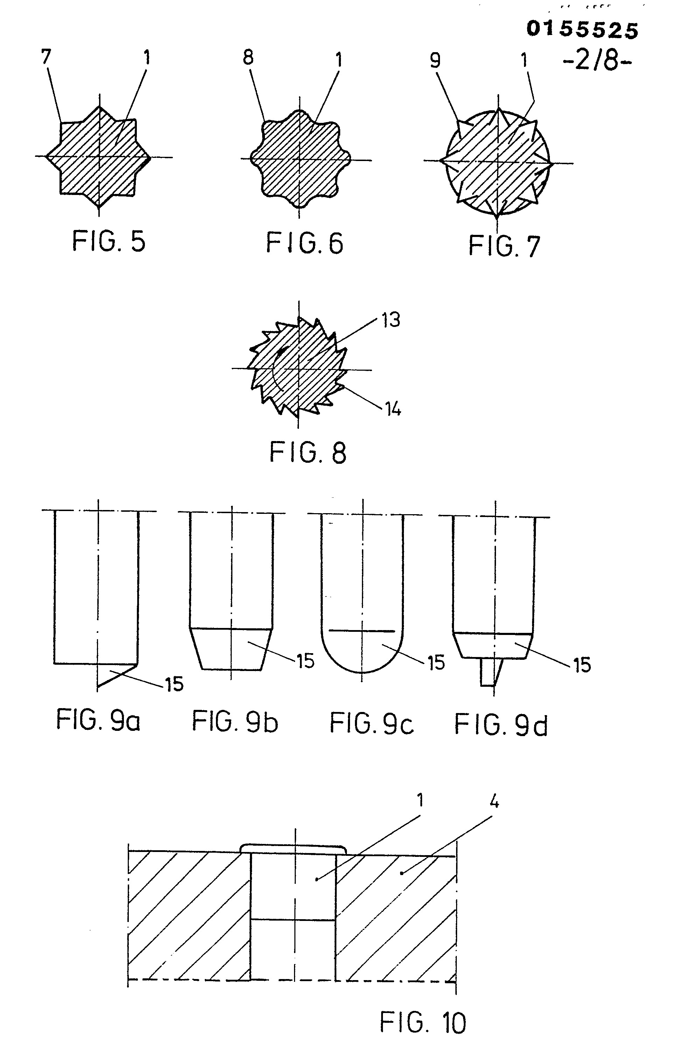

Auf der Außenseite des Mantels des zylindrischen Drehelementes 1 sind längsverlaufende Profilierungen angeordnet, die gemäß Fig. 5 im Querschnitt einen Spitzzahnkranz 7 und gemäß Fig. 6 einen Wellenzahnkranz 8 bilden. Es besteht auch die Möglichkeit, die Profilierungen symmetrisch oder asymmetrisch in Form von Zähnen 9, vgl. Fig. 7, oder in anderer Form, z. B. als Nocken, anzuordnen. Um die Drehbewegung des in die zylindrische Bohrung 5 des anzuschließenden Bodenteils 4 eingedrückten oder eingeschlagenen Drehelementes 1 ausführen zu können, besitzt die Kopffläche des Drehelements 1 eine geeignete Ausnehmung zum Eingriff eines Hilfswerkzeuges, z. B. eines Schraubendrehers. Gemäß Fig. 2 ist die Kopffläche als Schlitz 10 und gemäß Fig. 3 als Kreuzschlitz 11 ausgebildet. Eine weitere Variante der Ausbildung ist in Fig. 4 dargestellt; hier ist die mehrkantförmige Ausnehmung mit 12 bezeichnet.

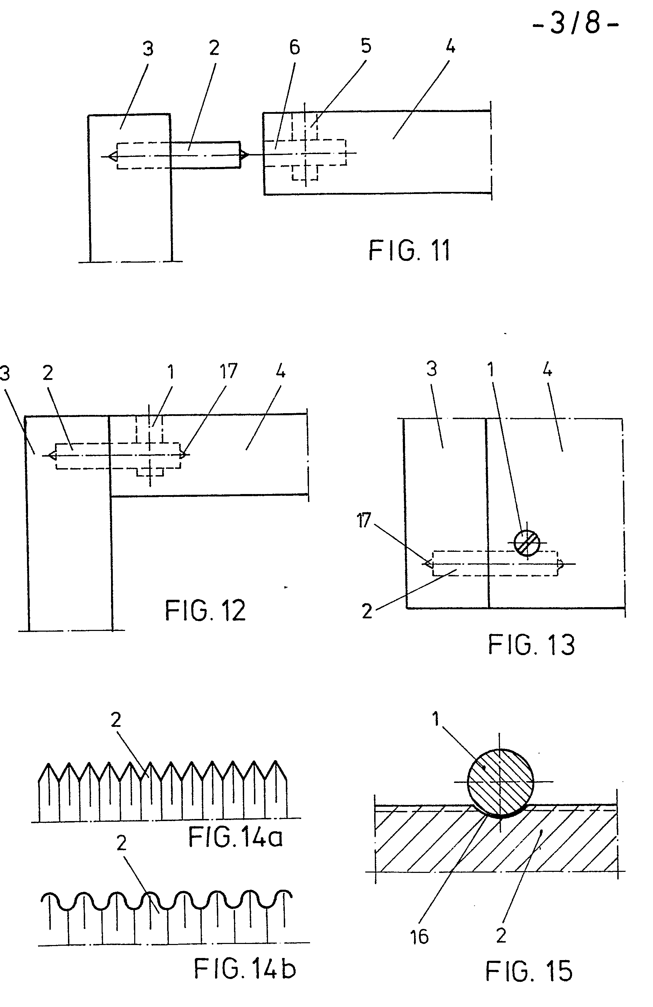

Wie aus Fig. 11 erkennbar ist, ist in einem Seitenteil 3 eines Möbelkorpus in einer zylindrischen Bohrung 6 ein Verbindungselement 2 fest eingeleimt. Dieses Seitenteil 3 wird mit dem herauskragenden Teil des Verbindungselements 2 in die zylindrische Bohrung 6 des Bodenteils 4 des Möbelkorpus eingedrückt oder eingeschlagen. Durch dieses Eindrücken oder Einschlagen gelingt es ohne Verwendung zusätzlicher Hilfsmittel nicht, eine völlig dichte Fuge zwischen dem Seitenteil 3 und dem Bodenteil 4 zu erreichen. Zur Herstellung einer dichten Verriegelungsverbindung dient das in die Bohrung 5 des anzuschließenden Bodenteils 4 eingeführte Drehelement 1, das am Verbindungselement 2 anliegt und bei Ausführung von Drehbewegungen das eingeleimte Verbindungselement 2 mit dem Seitenteil 3 problemlos in Richtung des Bodenteils 4 zieht.

Hierzu ist die zylindrische Bohrung 5 für das Drehelement 1 rechtwinklig und so versetzt zur zylindrischen Bohrung 6 für das Verbindungselement 2 angeordnet, daß dabei die zylindrische Bohrung 6 für das Verbindungselement 2 angeschnitten wird, zweckmäßigerweise annähernd in halber Bohrlochtiefe. Die untere Begrenzung der Bohrung 5 für das Drehelement 1 liegt außerhalb der Bohrung 6 für das Verbindungselement. Bei dieser Anordnung der Bohrungen 5 und 6 entsteht die in Fig. 15 dargestellte Berührungsfläche 16 zwischen dem eingeführten Drehelement 1 und dem eingeführten Verbindungselement 2.

In Fig. 9a bis 9d sind verschiedene Möglichkeiten der Ausbildung des Fußes 15 des Drehelementes 1 dargestellt. In Fig. 9a ist eine gerade und angeschrägte Ausbildung, in Fig. 9b eine angefaste Ausbildung, in Fig. 9c eine gerundete Ausbildung und in Fig. 9d eine angefaste Ausbildung mit Spitze dargestellt.

Bei dem in Fig. 1 dargestellten Drehelement 1 ist im Anschluß an die Kopffläche mit dem Schlitz 10 zur Einführung eines Hilfsmittels zum Drehen ein Anschlußteil 13 dargestellt, welches eine Verzahnung 14 aufweist. Die Zähne dieser Verzahnung 14 sind gegen die Drehrichtung des Drehelementes 1 gerichtet, so daß ein Zurückdrehen und damit ein Herausziehen des Verbindungselementes 2 aus der zylindrischen Bohrung 6 kaum möglich ist.

Bei einer besonderen Ausführung besitzt die Außenseite des Mantels des Verbindungselementes eine zur Außenseite des Mantels des Drehelementes korrespondierende Ausbildung. So ist in Fig. 14a die Mantelabwicklung passend zum Spitzzahnkranz 7 nach Fig. 5 und in Fig. 14b die zum Wellenzahnkranz 8 nach Fig. 6 dargestellt. Um das Zerstören der in die Bohrungen 5 und 6 eingebrachten Leimperlen zu erleichtern, sind an den Stirnseiten des Verbindungselementes 2 Spitzen 17 angeordnet.

In Fig. 10 ist ein Drehelement 1 mit einer über den Schaft auskragenden Kopffläche zur Abdeckung der zylindrischen Bohrung 5 dargestellt. Im allgemeinen liegt jedoch der Kopf des Drehelementes 1 bündig mit der Außenfläche des anzuschließenden Teiles 4.

Das Drehelement 1 und das Verbindungselement 2 können aus jedem für den vorgesehenen Verwendungszweck geeigneten Material bestehen. Die Profilierungen der Mantelflächen können auf der gesamten Länge oder nur auf einem Teil des Dreh- und des Verbindungselementes angeordnet sein.

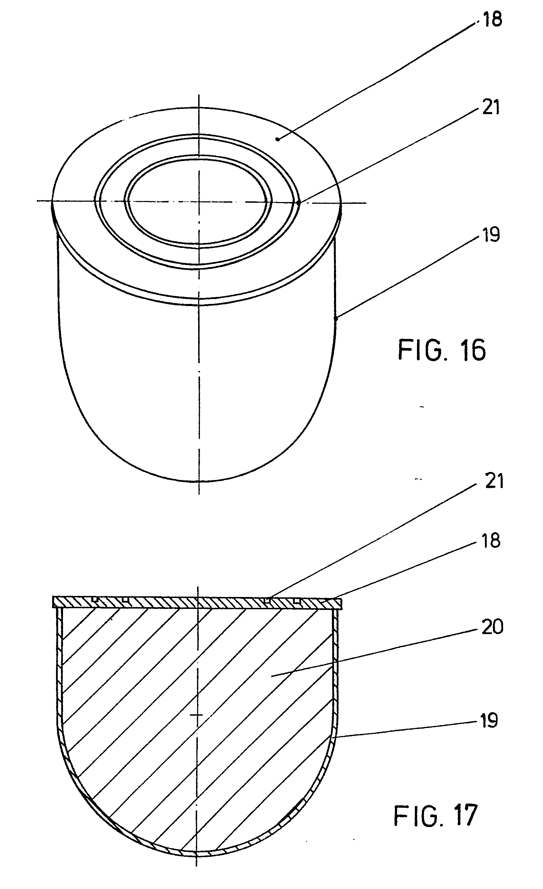

Die flexible zylindrische Hülle 19 besitzt eine stirnseitige aufgeschweißte Abdeckung 18, so daß der eingebrachte Klebstoff 20 hermetisch in der Hülle 19 eingeschlossen ist. Die stirnseitige Abdeckung 18 besitzt nach Fig. 16 zwei kreisförmig verlaufende Sollbruchstellen 21 in Form von Einritzungen, deren Tiefe ca.

1/3 bis 2/3 der Stärke der Abdeckung 1 entspricht, vgl. Fig. 17.

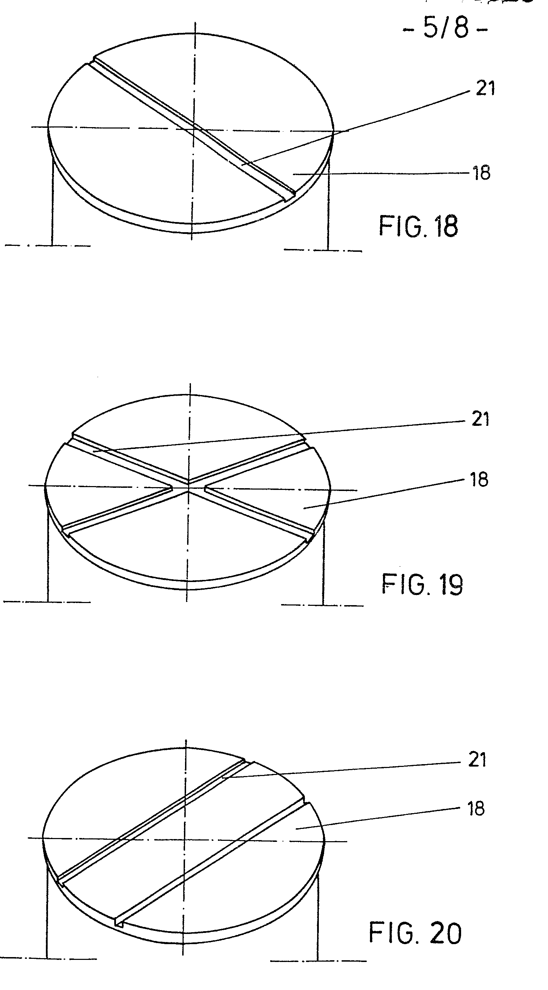

In Fig. 18 ist die Sollbruchstelle 21 durch eine als Linie gestaltete Einritzung gebildet, während nach Fig. 19 die Sollbruchstellen 21 Kreuzform aufweisen. Wenn auf der zur Bildung der Abdeckung 18 vorgesehenen flexiblen Folie Sollbruchstellen 21 in Form von linienförmig verlaufenden Einritzungen angeordnet werden, hängt es vom Abstand dieser linienförmig verlaufenden Einritzungen ab, ob auf der mit der Hülle 19 verschweißten Abdeckung 18 eine oder mehrere Einritzungen angeordnet sind. So zeigt Fig. 20 eine Abdeckung 18 mit mehreren parallel verlaufenden Sollbruchstellen 21 in Form von linienförmig verlaufenden Einritzungen. Die in Fig 16 dargestellten Sollbruchstellen 21 können ebenso beliebig bogenförmig verlaufend ausgebildet sein.

Das Verbindungselement 2 besitzt bekannterweise an den Stirnseiten je eine Spitze 17 und auf der Außenfläche beliebige Profilierungen 28. Beidseitig von den Stirnseiten aus ist je eine Längsbohrung 22 eingebracht, an deren Ende eine Querbohrung 23 angeordnet ist, die in der Ringfräsung 24 beginnt und endet. Sind auf jeder Hälfte des Verbindungselements 2 mehr als eine Ringfräsung 24 angebracht, so verlängert sich die Längsbohrung 22 entsprechend, wobei es ohne weiteres möglich ist, jeder Ringfräsung 24 zwei Querbohrungen 23 zuzuordnen. Bei zwei Ringfräsungen 24 könnten z. B. insgesamt vier Querbohrungen 23 vorhanden sein. In der Praxis hat sich gezeigt, daß zur Herstellung einer ausreichenden Verbundwirkung eine Ringfräsung 24 mit einer Querbohrung 23 ausreicht.

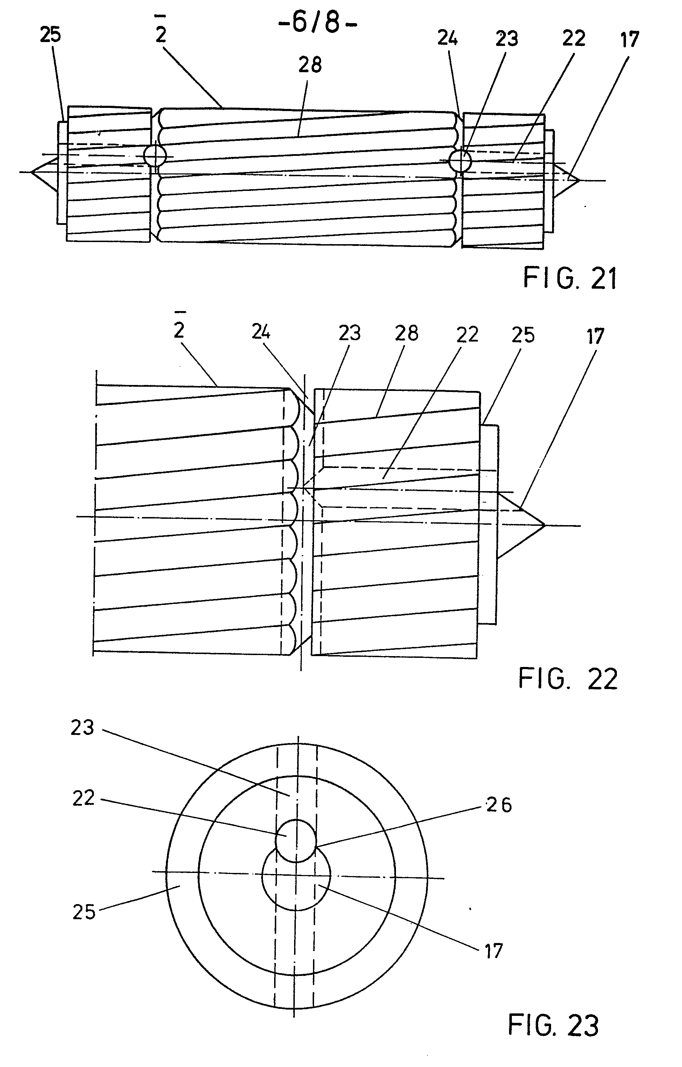

Die Längsbohrung 22 ist so angesetzt, daß die Spitze 17 angeschnitten wird, so daß sich, wie aus Fig. 23 erkennbar, längs der Spitze 17 zwei scharfkantige Schneiden 26 ergeben. Diese Schneiden 26 tragen zum besseren und problemloseren Zerstören der Leimperlenhülle 19 bei.

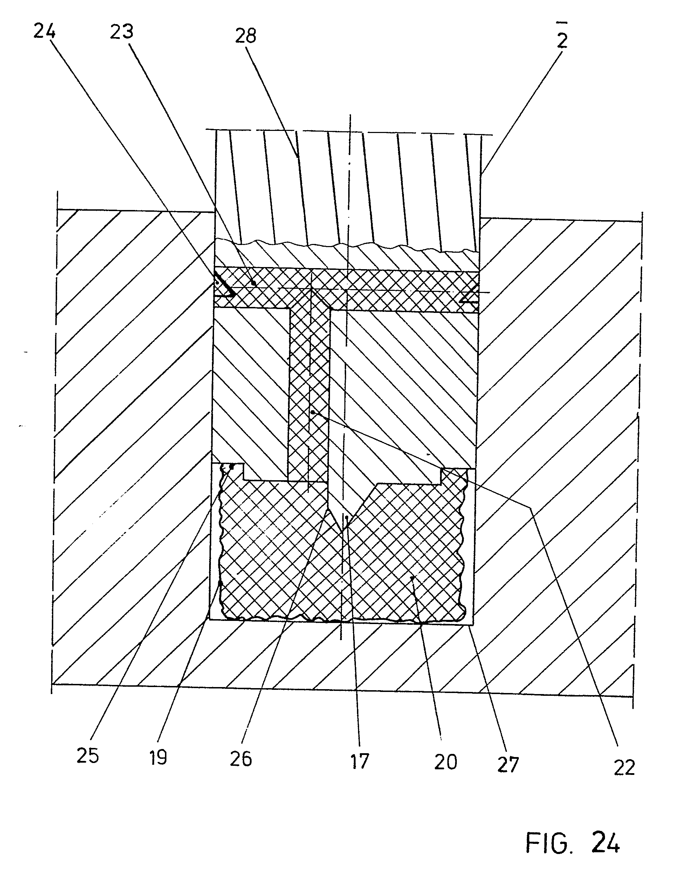

Die leere Leimperlenhülle 19 wird, wie in Fig. 24 dargestellt, im wesentlichen durch den äußeren Ringfalz 25 aufgenommen und an die Stirnseite 27 des Bohrlochs angedrückt. Die Leimperlenhülle 19 hindert also nicht die Verteilung des Klebstoffs 20 auf die Außenfläche des Verbindungselements 2. In Fig. 24 ist in schematischer Darstellung der Leimfluß in der Längsbohrung 22 und der Querbohrung 23 dargestellt. Wird das Verbindungselement 2 weiter an die Stirnseite 27 des Bohrloches gedrückt, dann wird ein Teil des aus der Leimperle freigesetzten Klebstoffs 20 über die Bohrungen 22 und 23 und ein weiterer Teil direkt auf die Außenfläche des Verbindungselements 2 geleitet.

Die Abdeckkappe für das Drehelement 1 besteht aus einem Steg 29 und einer senkrecht dazu angeordneten Deckelfläche 30. Auf der Außenseite des Steges 29 sind vier Klemmrippen 31 angeordnet, die der als Kreuzschlitz 11 ausgebildeten Ausnehmung in der Kopffläche des Drehelementes 1 entsprechen. Auf der Unterseite der Deckelfläche 30 sind zwei streifenförmig verlaufende Verankerungselemente 32 angeordnet, die im Querschnitt keilförmig verlaufen, wobei die Spitze 33 von der Deckelfläche 30 wegweist. Wie aus Fig. 26 erkennbar, verlaufen die Verankerungselemente 32 vom Steg 29 aus bis nahe an den äußeren Rand der Deckelfläche 30, d. h., die Verankerungselemente 32 werden von der Deckelfläche 30 abgedeckt. Der Steg 29 verbreitert sich konisch vom freien Ende aus bis zur Deckelfläche 30.

Durch die erfindungsgemäß angeordneten Verankerungselemente 4, die nach dem Einsetzen der Abdeckkappe in die Ausnehmung der Kopffläche des Drehelementes 1 außerhalb des zylindrischen Bohrloches 6 für das Drehelement 1 in die Holz- bzw. Spanplatte eintreibbar sind, erfolgt eine Arretierung der Abdeckkappe und damit auch des Drehelementes 1. Die Deckelfläche 30 deckt die Verankerungselemente 4 völlig ab, so daß im eingesetzten Zustand der Abdeckkappe keine Verankerungselemente 4 sichtbar sind.

- Patentansprüche -

- 15 -

14a

Aufstellung der Bezugszeichen

1      Drehelement
2      Verbindungselement
3      Seitenteil eines Möbelkorpus
4      Bodenteil eines Möbelkorpus
5      zylindrische Bohrung für 1
6      zylindrische Bohrung für 2
7      Spitzzahnkranz von 1
8      Wellenzahnkranz von 1
9      Zähne von 1
10     Schlitz in Kopffläche von 1
11     Kreuzschlitz in Kopffläche von 1
12     mehrkantförmige Ausnehmung in Kopffläche von 1
13     Anschlußteil
14     Verzahnung von 13
15     Fuß von 1
16     Berührungsfläche zwischen 1 und 2
17     Spitze von 2
18     stirnseitige Abdeckung
19     flexible Hülle
20     Klebstoff
21     Sollbruchstellen
22     Längsbohrung
23     Querbohrung
24     Ringfräsung
25     Ringfalz
26     Schneiden
27     Stirnseite des Bohrlochs
28     Profilierung auf Außenfläche

14b

0155525

29 Steg
30 Deckelfläche
31 Klemmrippen
32 Verankerungselemente
33 Spitze

Patentansprüche:

1. Verbindung von flächigen Teilen, insbesondere bei Möbeln aus Holz oder holzähnlichem Material, unter Verwendung von Klebstoff (20) und einem Verbindungselement (2), bei der der Klebstoff (20) in eine flexible Hülle (19) hermetisch eingeschlossen und die Hülle (19) mit dem eingeschlossenen Klebstoff (20) als selbständiger Teil, der annähernd zylindrische Form mit einer stirnseitigen Abdeckung (18) aufweist, in die zylindrischen Bohrlöcher der zu verbindenden Teile (3;4) sich dort verklemmend einbringbar ausgebildet ist und bei der das Verbindungselement (2) zur unsichtbaren Verbindung in die Bohrlöcher einschlagbar oder einpreßbar ist und auf der Außenfläche eingepreßte oder eingeschnittene Profilierungen (28) aufweist, und gebildet aus einem um ein vorgegebenes Maß zusammengepreßten zylindrischen Rohling aus Holz oder einem anderen statisch stabilen zusammenpreßbaren aufquellfähigen Material, bei dem die Außenfläche zur Verbesserung der Aufquellfähigkeit an mehreren Stellen durch Einschneiden, vorzugsweise in Form von Ringfräsungen (24), zerstört ist und bei dem beide Stirnseiten zur leichteren Zerstörung der flexiblen Hülle (19) jeweils spitz verlaufend ausgebildet sind oder je eine Spitze (17) aufweisen, dadurch gekennzeichnet, daß in das Verbindungselement (2) beidseitig von den Stirnseiten aus je eine Längsbohrung (22) eingebracht ist, an deren Enden eine oder mehrere durchgehende Querbohrungen (23) angeordnet sind.

2. Verbindung nach Anspruch 1, dadurch gekennzeichnet, daß am Ende einer Längsbohrung (22) zwei Querbohrungen (23) rechtwinklig zueinander verlaufend angeordnet sind.

3. Verbindung nach Anspruch 1 oder 2, dadurch gekennzeichnet, daß die an der Stirnseite vorhandene Spitze (17) durch eine Längsbohrung (22) angeschnitten ist.

4. Verbindung nach einem der Ansprüche 1 bis 3, dadurch gekennzeichnet, daß die Querbohrungen (23) in den Ringfräsungen (24) beginnen und enden.

5. Verbindung nach einem der Ansprüche 1 bis 4, dadurch gekennzeichnet, daß an den Stirnseiten je ein äußerer Ringfalz (25) angeordnet ist.

6. Verbindung nach Anspruch 1, dadurch gekennzeichnet, daß die stirnseitige Abdeckung (18) der mit Klebstoff (20) gefüllten flexiblen Hülle (19) eine oder mehrere Sollbruchstelle(n) (21) aufweist.

7. Verbindung nach Anspruch 6, dadurch gekennzeichnet, daß die Sollbruchstellen (21) durch Einritzungen gebildet sind.

8. Verbindung nach Anspruch (6), dadurch gekennzeichnet, daß die Sollbruchstellen (21) durch punktförmige Vertiefungen gebildet sind.

9. Verbindung nach Anspruch 7 und 8, dadurch gekennzeichnet, daß die Sollbruchstellen (21) in Form von Einritzungen oder Vertiefungen linienförmig oder kreisförmig verlaufend ausgebildet sind.

10. Verbindung nach Anspruch 7 bis 9, dadurch gekennzeichnet, daß sich die Einritzungen und die Vertiefungen über ca. 1/3 der Stärke der stirnseitigen Abdeckung (18) erstrecken.

11. Verbindung nach dem Gattungsbegriff des Anspruches 1 unter Verwendung eines Drehelementes (1) zur Herstellung einer Verriegelung, das in ein zylindrisches Bohrloch des anzuschließenden Teiles (3 bzw. 4) einführbar ist, gekennzeichnet durch einen zylindrischen Querschnitt mit auf der Außenseite des Mantels angeordneten vorstehenden Profilierungen und auf dem Mantel senkrecht stehender Kopffläche, die eine Ausnehmung zum Eingriff eines Hilfswerkzeugs aufweist.

12. Verbindung nach Anspruch 11, dadurch gekennzeichnet, daß die Profilierungen im Querschnitt einen Spitzzahnkranz (7) bilden.

13. Verbindung nach Anspruch 11, dadurch gekennzeichnet, daß die Profilierungen im Querschnitt einen Wellenzahnkranz (8) bilden.

14. Verbindung nach Anspruch 11, dadurch gekennzeichnet, daß die Profilierungen durch einzelne Zähne (9), Nocken oder dergleichen gebildet sind.

15. Verbindung nach Anspruch 14, dadurch gekennzeichnet, daß die Zähne (9), Nocken oder dergleichen symmetrisch angeordnet sind.

16. Verbindung nach Anspruch 14, dadurch gekennzeichnet, daß die Zähne (9), Nocken oder dergleichen asymmetrisch angeordnet sind.

17. Verbindung nach einem der Ansprüche 11 bis 16, dadurch gekennzeichnet, daß die Profilierungen auf der Außenseite des Mantels korrespondierend zu der Ausbildung des Zylindermantels des Verbindungselementes (2) ausgebildet sind.

18. Verbindung nach einem der Ansprüche 11 bis 17, dadurch gekennzeichnet, daß die Kopffläche über den Schaft auskragt und zur Abdeckung der zylindrischen Bohrung (5) ausgebildet ist.

19. Verbindung nach einem der Ansprüche 11 bis 18, dadurch gekennzeichnet, daß der an die Kopffläche anschließende Teil des Mantels abweichend vom übrigen Teil des Mantels gestaltet ist.

20. Verbindung nach Anspruch 19, dadurch gekennzeichnet, daß das Anschlußteil (13) eine Verzahnung (14) aufweist, deren Zähne gegen die Drehrichtung des Drehelementes (1) gerichtet sind.

21. Verbindung nach einem der Ansprüche 11 bis 20, dadurch gekennzeichnet, daß die Ausnehmung in der Kopffläche als Schlitz (10) oder Kreuzschlitz (11) ausgebildet ist.

22. Verbindung nach einem der Ansprüche 11 bis 20, dadurch gekennzeichnet, daß die Ausnehmung in der Kopffläche mehrkantförmig (12) ausgebildet ist.

23. Verbindung nach einem der Ansprüche 11 bis 22, dadurch gekennzeichnet, daß der Fuß (15) angeschrägt oder angefast ist oder gerundet verläuft.

24. Verbindung nach einem der Ansprüche 11 bis 22, dadurch gekennzeichnet, daß der Fuß (15) spitz verlaufend ausgebildet oder mit einer Spitze versehen ist.

25. Verbindung nach einem der Ansprüche 11 bis 24, dadurch gekennzeichnet, daß die Kopffläche durch eine Abdeckkappe abgedeckt ist.

26. Verbindung nach Anspruch 25, dadurch gekennzeichnet, daß die Abdeckkappe in der Ausnehmung der Kopffläche verankert ist.

27. Verbindung nach Anspruch 25, dadurch gekennzeichnet, daß die Abdeckkappe in einer gesonderten Ausnehmung der Kopffläche verankert ist.

28. Verbindung von flächigen Teilen unter Verwendung eines Verbindungselementes und eines Drehelementes nach Anspruch 11 bis 27, dadurch gekennzeichnet, daß die zylindrische Bohrung (5) für das Drehelement (1) rechtwinklig und so versetzt zur zylindrischen Bohrung (6) für das Verbindungselement (2) angeordnet ist, daß dabei die zylindrische Bohrung (6) für das Verbindungselement angeschnitten ist.

29. Verbindung nach Anspruch 28, dadurch gekennzeichnet, daß die untere Begrenzung der Bohrung (5) für das Drehelement (1) außerhalb der Bohrung (6) für das Verbindungselement (2) liegt.

30. Verbindung nach Anspruch 28 oder 29, dadurch gekennzeichnet, daß die Bohrung (5) für das Drehelement (1) die Bohrung (6) für das Verbindungselement (2) annähernd in deren halber Bohrlochtiefe anschneidet.

31. Verbindung nach Anspruch 28, dadurch gekennzeichnet, daß die Außenseite des Mantels des Verbindungselementes (2) korrespondierend zur Außenseite des Mantels des Drehelementes (1) ausgebildet ist.

32. Verbindung nach Anspruch 25 und 26, dadurch gekennzeichnet, daß auf der Unterseite der Deckelfläche (30) der Abdeckkappe eine oder mehrere Verankerungselemente (32) angeordnet sind.

33. Verbindung nach Anspruch 32, dadurch gekennzeichnet, daß zwei sich gegenüberliegende Verankerungselemente (32) angeordnet sind.

34. Verbindung nach Anspruch 32 oder 33, dadurch gekennzeichnet, daß die Verankerungselemente (32) im Querschnitt keilförmig mit nach unten gerichteter Spitze ausgebildet und streifenförmig verlaufend angeordnet sind.

35. Verbindung nach einem der Ansprüche 32 bis 34, dadurch gekennzeichnet, daß die Verankerungselemente (32) vom Steg (29) aus bis nahe an den äußeren Rand der Deckelfläche (30) verlaufen.

36. Verbindung nach Anspruch 32 oder 33, dadurch gekennzeichnet, daß die Verankerungselemente (32) durch Stifte gebildet sind.

37. Verbindung nach einem der Ansprüche 32 bis 36, dadurch gekennzeichnet, daß sich der Steg (29) vom freien Ende aus bis zur Deckelfläche (30) konisch verbreitert.

38. Verbindung nach einem der Ansprüche 32 bis 37, dadurch gekennzeichnet, daß auf der Außenseite des Steges (29) zu der Formgebung der Ausnehmung in der Kopffläche korrespondierende Klemmrippen (31) angeordnet sind.

0155525

FIG. 1

FIG. 2      FIG. 3      FIG. 4

FIG. 5

FIG. 6

FIG. 7

FIG. 8

FIG. 9a

FIG. 9b

FIG. 9c

FIG. 9d

FIG. 10

FIG. 11

FIG. 12

FIG. 13

FIG. 14a

FIG. 14b

FIG. 15

FIG. 16

FIG. 17

21

18

FIG. 18

21

18

FIG. 19

21

18

FIG. 20

FIG. 21

FIG. 22

FIG. 23

0155525

FIG. 24

FIG. 25

FIG. 26

FIG. 27